(19) **Europäisches Patentamt / European Patent Office / Office européen des brevets**

(11) **EP 2 494 491 B1**

(12) **FASCICULE DE BREVET EUROPEEN**

(45) Date de publication et mention
de la délivrance du brevet:
**12.07.2017 Bulletin 2017/28**

(21) Numéro de dépôt: **10788105.4**

(22) Date de dépôt: **27.10.2010**

(51) Int Cl.:
**G06F 21/62** *(2013.01)*    **G06F 21/32** *(2013.01)*
**G06K 9/62** *(2006.01)*

(86) Numéro de dépôt international:
**PCT/FR2010/052308**

(87) Numéro de publication internationale:
**WO 2011/051624 (05.05.2011 Gazette 2011/18)**

(54) **IDENTIFICATION PAR CONTROLE DE DONNEES BIOMETRIQUES D'UTILISATEUR**

IDENTIFIZIERUNG DURCH ÜBERPRÜFUNG DER BIOMETRISCHEN DATEN EINES BENUTZERS

IDENTIFICATION BY MEANS OF CHECKING A USER'S BIOMETRIC DATA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.10.2009 FR 0957595**

(43) Date de publication de la demande:
**05.09.2012 Bulletin 2012/36**

(73) Titulaire: **MORPHO**
**92130 Issy-Les-Moulineaux (FR)**

(72) Inventeurs:
• **CHABANNE, Hervé**
**F-75015 Paris (FR)**
• **BRINGER, Julien**
**F-75015 Paris (FR)**

(74) Mandataire: **Cabinet Plasseraud**
**66 rue de la Chaussée d'Antin**
**75440 Paris Cedex 09 (FR)**

(56) Documents cités:
**WO-A2-2007/008789    US-A1- 2003 061 233
US-A1- 2008 097 983**

• **JULIEN BRINGER ET AL: "Extending
Match-On-Card to Local Biometric
Identification", 16 septembre 2009 (2009-09-16),
BIOMETRIC ID MANAGEMENT AND
MULTIMODAL COMMUNICATION, SPRINGER
BERLIN HEIDELBERG, BERLIN, HEIDELBERG,
PAGE(S) 178 - 186, XP019130821, ISBN:
978-3-642-04390-1 le document en entier**

**Description**

La présente invention concerne un contrôle d'identité basé sur des données biométriques stockées dans une base de données, et plus particulièrement, lorsque ces données sont stockées sous une forme chiffrée.

Les systèmes d'identification basés sur des données biométriques comprennent en général une entité d'identification qui a accès à une base de données contenant des données biométriques en fonction desquelles l'entité d'identification est en mesure d'identifier une personne.

Les données biométriques stockées dans cette base de données sont issues d'une phase d'enrôlement (ou 'enrollment' en anglais), au cours de laquelle une partie d'un être humain, telle que par exemple des empreintes ou l'iris, est captée sous la forme de données numériques biométriques pour être enfin stockée dans la base de données et être utilisée en tant que données de référence pour effectuer une identification d'une personne.

En effet, lorsque l'entité d'identification reçoit de nouvelles données biométriques, elle est alors en mesure de déterminer l'identification de la personne à qui sont associées ces nouvelles données biométriques sur la base de comparaison entre ces données biométriques reçues et les données biométriques de référence stockées dans la base de données.

Il convient de noter qu'il est en général important que de telles données biométriques restent confidentielles, afin de pouvoir protéger la vie privée des personnes auxquelles sont associées ces données.

Ainsi, il peut être prévu à cet effet de stocker ces données biométriques sous une forme chiffrée dans la base de données.

Toutefois, dans ce cas, l'étape de comparaison consistant à comparer des données biométriques reçues depuis une entité d'identification avec des données biométriques stockées dans la base de données peut alors s'avérer beaucoup plus complexe que dans le cas où ces données biométriques sont stockées dans la base de données sans chiffrement.

On peut alors imaginer que pour faire cette recherche dans la base de données, il soit nécessaire de déchiffrer les données biométriques qui y sont stockées. Mais une étape de déchiffrement est susceptible de fortement grever l'efficacité d'une telle recherche dans la base de données, ainsi que de limiter la sécurité finale.

D'un autre côté, on connait des systèmes de recherche adaptés pour effectuer des recherches dans une base de données comprenant des données cryptées.

On connait un document 'Searchable symmetric encryption: improved definitions and efficient constructions' de Reza Curtmola, Juan A. Garay, Seny Kamara, Rafail Ostrovsky (ACM Conference on Computer and Communications Security 2006) qui propose de gérer le stockage de documents dans une base de données de telle sorte qu'il soit possible de faire une recherche dans cette base de données de manière protégée.

Puis, une recherche peut être effectuée sur la base de mots contenus dans un dictionnaire sans toutefois révéler des informations explicites sur les documents stockés.

Plus précisément, il est ici proposé de stocker un identifiant de document à une adresse dans la base de données, cette adresse ayant été obtenue à partir de l'application d'une famille de fonctions de hachage sur le document considéré. En procédant ainsi, on est en mesure de créer des liens indirects entre document et adresse de stockage dans la base de données afin de stocker de manière cryptée ces documents.

En effet, lorsqu'un client souhaite rechercher dans la base de données les documents qui contiennent une liste de mots clés, il calcule les adresses auxquelles sont stockées les identifiants de ces documents. Puis, il reçoit depuis la base de données une liste d'identifiants des documents concernés.

Toutefois, ce système est limité à la gestion de documents.

US 2008/097983 A1 (Monro Donald Martin) concerne un procédé permettant d'améliorer la vitesse à laquelle une base de données stockant un grand nombre d'enregistrements biométriques peut reconnaître un enregistrement biométrique qui lui est soumis comme étant l'un des enregistrements biométriques stockés dans la base, à une tolérance d'erreur près.

WO 2007/008789 A2 (Solidus Networks Inc, doing business as Pay By Touch, Nguyen Nhan, Hollowood Harry) concerne un procédé pour stocker une information biométrique d'utilisateur dans une base de données. Le procédé reçoit un code PIN et une information biométrique de la part d'un utilisateur. Le procédé applique un calcul sur le code PIN afin de générer une clé secrète. Cette clé secrète est utilisée pour chiffrer l'information biométrique puis la stocker dans la base de données.

La présente invention vise à améliorer la situation.

Un premier aspect de la présente invention propose un procédé de gestion d'une base de données adaptée pour associer une donnée biométrique et un identifiant ;
ledit procédé comprenant les étapes suivantes pour chaque identifiant à associer à une donnée biométrique :

    /1/ recevoir une donnée biométrique ;
    /2/ générer une pluralité de mots clé par application d'une famille de fonctions de hachage à la donnée biométrique ;
    /3/ obtenir une pluralité d'adresses par application d'une fonction d'adressage à la pluralité de mots clé et à une clé secrète ;
    /4/ stocker ledit identifiant à ladite pluralité d'adresses.

On entend par les termes 'donnée biométrique', une donnée biométrique qui peut être captée sur un utilisateur U dans une phase initiale, dite phase d'enrôlement. Aucune limitation n'est attachée au type de cette donnée biométrique.

On entend ici par les termes 'fonction d'adressage' une fonction qui est adaptée pour recevoir en entrée un mot clé et une clé secrète afin de fournir en sortie une adresse de la base de données.

Une telle fonction d'adressage peut correspondre à une table de correspondance qui fournit une adresse de la base de données en fonction d'un mot clé et d'une clé secrète.

On entend par les termes 'clé secrète', toute clé secrète quelque soit le moyen de la générer. Elle peut notamment être dédiée à un utilisateur ou encore à un ensemble d'utilisateurs. Aucune limitation n'est attachée à cette clé secrète ni au contexte dans lequel elle est utilisée.

L'utilisateur est identifié par un identifiant Id. On souhaite ici associer dans la base de données cet identifiant Id à la donnée biométrique captée sur ce même utilisateur afin d'être en mesure de l'identifier ultérieurement.

A cet effet, il est prévu de stocker cet identifiant Id en différents emplacements de la base de données, et plus précisément, à différentes adresses de la base de données qui sont issues de la donné biométrique de référence elle-même, en combinaison avec une clé secrète K. L'association entre l'identifiant et la donnée biométrique repose donc sur le fait que les adresses de stockage de l'identifiant dans la base de données sont, en quelque sorte, dérivées à partir de la donnée biométrique.

On prévoit de dériver la donnée biométrique par application d'une famille H de fonctions de hachage respectives, comprenant les fonctions de hachage $h_1$,..., $h_i$, .., $h_\mu$, $\mu$ étant un entier quelconque. A l'issue de cette dérivation, on dispose d'autant de mots clé que de fonctions de hachage appliquées, chacun de ces mots clé représentant en quelque sorte la donnée biométrique. Puis, sur la base de chaque mot clé ainsi obtenu et de la clé secrète K, on obtient une adresse dans la base de données par application d'une fonction d'adressage F.

On stocke à chacune de ces adresses l'identifiant concerné Id, de l'utilisateur auquel correspond la donnée biométrique.

Dans ces conditions, la base de données considérée stocke en différents emplacements, ou différentes localisations, un identifiant correspondant à une même donnée biométrique. Ces différentes localisations représentent chacune cette même donnée biométrique combinée à une clé secrète.

En procédant ainsi, on est donc en mesure de gérer le stockage d'association de données biométriques et d'identifiants sous forme cryptée pour procéder à une identification, de manière simple. En effet, les calculs mis en oeuvre sont relativement basiques et simples à mettre en oeuvre.

Grâce à l'application d'une famille de fonctions de hachage, on est en mesure de stocker en différents emplacements de la base de données le même identifiant et, ainsi, on est en mesure de créer un lien entre une pluralité d'adresses de la base de données et une donnée biométrique.

Il convient de noter que, pour une même partie d'une même personne, une donnée biométrique captée à un instant t peut différer d'une donnée biométrique captée à un instant t+1. Dans un tel contexte, il est avantageux de stocker ainsi un même identifiant d'une donnée biométrique afin d'être en mesure de le rechercher plus tard en fonction de cette même famille de fonctions de hachage.

En effet, la gestion via l'application de famille de hachage permet d'étaler le spectre des recherches autour d'une même donnée biométrique en définissant des mots clé qui permettent, dans une étape d'identification ultérieure, d'identifier une donnée biométrique même si elle est différente de la donnée biométrique qui a servi à remplir la base de données.

Les données biométriques utiles pour procéder à une identification d'utilisateur ne sont pas accessibles dans la base de données où elles sont stockées. Pour y accéder, il convient notamment de détenir la clé secrète qui a été utilisée pour les stocker, dans une phase d'enrôlement. Cette clé secrète peut notamment être une clé allouée exclusivement pour un utilisateur donné et gardée secrète par lui.

Il convient de noter que, sans cette clé, il n'est pas possible de faire de lien entre les identifiants stockés dans la base de données et les données biométriques auxquelles ils sont associés.

Avantageusement, dans une telle base de données, il est possible d'effectuer une recherche d'identifiant de manière aisée sur la base d'une donnée biométrique captée sur un utilisateur de sorte à identifier cet utilisateur, tout en protégeant la confidentialité des données biométriques.

En effet, dans une phase d'identification, lorsqu'une recherche dans la base de données est requise en fonction d'une donnée biométrique captée à identifier, il suffit d'obtenir une liste d'adresses de stockage à partir de cette nouvelle donnée biométrique à identifier, de manière similaire à ce qui est fait lors du stockage de l'identifiant aux étapes précédemment énoncées de phase d'enrôlement. Ensuite, en réponse à cette requête, les identifiants qui sont stockés dans la base de données sont transmis. Sur la base de ces identifiants, on peut effectuer une identification de l'utilisateur.

La famille de fonctions de hachage peut être de type LSH (pour 'Locality Sensitive Hashing' en anglais), par exemple comme cela est décrit dans le document de P. Indyk et R. Motwani, 'Approximate Nearest Neighbors: Towards Removing the Curse of Dimensionality', STOC 1998.

Dans ce cas, les relations ci-dessous sont vérifiées :

$$\Pr_1\left[h(x) = h(x') \big| d(x,x') < r_1\right] > p_1$$

$$\Pr_2\left[h(x) = h(x') \big| d(x,x') > r_2\right] < p_2$$

où p1 et p2 sont des valeurs de probabilité comprises entre 0 et 1 et vérifient : p1>p2 ;

où x et x' sont des données biométriques ;

où d(x,x') représente la distance de Hamming entre les données biométriques x et x' ;

où $\Pr_1$ désigne la probabilité pour que deux valeurs issues de deux données biométriques différentes par application d'une fonction h soient égales, sachant que la distance qui les sépare est inférieure à $r_1$ ; et

où $\Pr_2$ désigne la probabilité pour que deux valeurs issues de deux données biométriques différentes par application de la fonction h soient égales, sachant que la distance qui les sépare est supérieure à $r_2$.

Afin d'augmenter la protection contre certaines attaques, dans un exemple, l'identifiant est stocké sous forme chiffrée par application d'une fonction de chiffrement probabiliste sur la base d'une clé de chiffrement et d'une valeur aléatoire.

En procédant ainsi, on peut en outre garantir que les identifiants ne sont pas accessibles par des attaques de type statistique. En effet, ici on ne stocke jamais deux fois la même valeur chiffrée d'identifiant dans la base de données. Il est de ce fait impossible d'établir de quelconques liens entre les différentes adresses de stockage et les identifiants, puisqu'il est impossible de déterminer les différentes localisations de stockage d'un même identifiant dans la base de données.

De manière plus précise, une nouvelle valeur aléatoire est générée à chacun des stockages d'un même identifiant de sorte que l'identifiant est stocké sous différentes valeurs chiffrées à chacune de ses adresses de stockage dans la base de données.

Dans un exemple, à l'étape /2/, un mot clé est obtenu par concaténation, d'une part, du résultat de l'application d'une fonction de hachage sur la donnée biométrique et, d'autre part, d'un indice associé à la fonction de hachage appliquée,

des indices différents les uns des autres étant respectivement associés aux fonctions de hachage de la famille de hachage.

Dans ces conditions, on peut garantir qu'au cours d'une identification, lorsque la liste des identifiants stockés à une adresse donnée sera requise, cette liste ne contiendra pas plus d'une fois un même identifiant. Il est ainsi plus difficile d'établir des liens entre les adresses de stockage et les identifiants pour un éventuel attaquant.

Ainsi, on évite astucieusement de stocker les identifiants dans la base de données de manière séquentielle. On augmente alors la protection contre d'éventuelles attaques.

Un deuxième aspect de la présente invention propose un procédé d'identification biométrique à partir d'une base de données gérée par un procédé de gestion selon le premier aspect de la présente invention, basé sur une famille de fonctions de hachage, une clé secrète et une fonction d'adressage ;

ledit procédé comprenant les étapes suivantes :

/1/ recevoir une donnée biométrique à identifier;

/2/ générer une pluralité de mots clé par application de ladite famille de fonctions de hachage à la donnée biométrique à identifier ;

/3/ générer une pluralité d'adresses par application de la fonction d'adressage à la pluralité de mots clé et à ladite clé secrète ;

/4/ émettre une requête d'identification indiquant ladite liste d'adresses ;

/5/ recevoir une liste d'identifiants pour chacune desdites adresses ; et

/6/ décider si un identifiant de la liste d'identifiants est associé à la donnée biométrique à identifier sur la base d'une analyse statistique des identifiants reçus.

Grâce à ces caractéristiques, on est en mesure d'exploiter de manière simple la base de données structurée selon le premier aspect de la présente invention.

On peut ainsi prévoir de capter une donnée biométrique sur un utilisateur à identifier. Puis, à partir de cette donnée biométrique à identifier, un ensemble d'adresses de la base de données peut être déterminé en utilisant la même famille de fonctions de hachage, la même fonction d'adressage et la même clé secrète qu'utilisés lors du remplissage de la base de données.

Plus précisément, dans la présente invention, on capte une nouvelle donnée biométrique $b_{search}$ d'un utilisateur à identifier. Puis, une pluralité de mots clé est obtenue en appliquant à cette donnée biométrique la même famille de fonctions de hachage H. Ensuite, en utilisant la même fonction F et en l'appliquant à la clé secrète avec chacun des mots clé, on obtient une pluralité d'adresses de la base de données.

En requérant la réception des identifiants stockés dans la base de données aux adresses ainsi obtenues, il est alors possible de déterminer par analyse statistique si l'utilisateur peut être identifié à partir de la donnée biométrique captée $b_{search}$.

Il convient de noter que si la donnée biométrique stockée dans la base de données, ou encore donnée biométrique de référence $b_{ref}$, et la donnée biométrique à identifier $b_{search}$ proviennent d'un même utilisateur, alors elles sont proches au sens de la distance de Hamming. Ainsi, si ces données biométriques sont issues d'une même personne, alors on considère qu'il y a une forte probabilité pour que l'inéquation suivante soit vérifiée :

$$d(b_{ref}, b_{search}) < \lambda_{min}$$

où d est la distance de Hamming
et

$\lambda_{min}$ est une valeur seuil de distance entre deux données biométriques en-deçà de laquelle ces données biométriques sont probablement issues d'une même personne.

Si ces données biométriques ne sont pas issues de la même personne alors on considère qu'il y a une forte probabilité pour que l'inéquation suivante soit vérifiée :

$$d(b_{ref}, b_{search}) > \lambda_{max}$$

où d est la distance de Hamming
et

$\lambda_{max}$ est une valeur seuil de distance entre deux données biométriques au-delà de laquelle ces données biométriques ne sont probablement pas issues d'une même personne.

Or, si deux données biométriques $b_{ref}$ et $b_{search}$ sont proches, de par les propriétés énoncées ci-dessus au regard de la famille des fonctions de hachage, il est fort probable que les résultats issus de l'application des fonctions de hachage sur ces deux données biométriques soient égaux. Par conséquent, il y a une forte probabilité pour que la liste des adresses obtenues à partir de la donnée biométrique à identifier corresponde à plusieurs adresses auxquelles est stocké l'identifiant de l'utilisateur.

Ainsi, par analyse statistique des identifiants reçus en retour de la requête, on est en mesure d'identifier l'utilisateur ou de décider que cet utilisateur n'est pas enregistré dans la base de données.

Avantageusement, la relation entre les données biométriques et les identifiants associés est protégée au cours de l'application d'un tel procédé selon la présente invention. En outre, ce type d'identification repose sur des calculs simples à mettre en oeuvre.

Toutefois, il serait éventuellement possible d'envisager qu'un attaquant écoute les échanges avec la base de données, au cours de la mise en oeuvre d'un procédé d'identification selon la présente invention.

Plus précisément, lorsqu'il est souhaité d'identifier une personne sur la base de données biométriques, on capte une donnée biométrique $b_{search}$. Puis, on obtient les adresses associées à cette donnée biométrique :

$$@'_i = F(K, h_i(b_{search}))$$

où $b_{search}$ est la donnée biométrique à identifier ;
où K est la clé secrète considérée pour cette identification :
où F est la fonction d'adressage.

Pour chacune de ces adresses $@'_i$ on récupère éventuellement une liste d'identifiants comme suit. Ainsi, pour l'adresse $@'_1$, on récupère la liste :

$$L_1 = \{id_{1,1} ; \dots ; id_{1,N1}\}$$

Pour l'adresse $@'_2$, on récupère la liste :

$$L_2 = \{id_{2,1} ; \dots ; id_{2,N2}\}$$

Ainsi de suite jusqu'à l'adresse $@'_\mu$, à laquelle on récupère la liste :

$$L_\mu = \{id_{\mu,1} ; \dots ; id_{\mu,N\mu}\}$$

Au moment de cette étape de transmission à l'entité d'identification des listes d'identifiants récupérés depuis la base de données aux adresses fournies par la fonction d'adressage, un attaquant peut obtenir ces identifiants lui aussi par écoute de la transmission. Par écoutes successives, on pourrait envisager que cet attaquant soit en mesure d'établir des relations entre les différentes listes d'identifiants. Puis, par attaque statistique et par tâtonnement, on pourrait alors envisager qu'il puisse violer un certain niveau de confidentialité de ce procédé d'identification.

Par conséquent, dans un exemple, il est prévu que les identifiants Id stockés dans la base de données, et les identifiants transitant à partir de la base de données, soient manipulés sous une forme cryptée. Plus précisément, il est prévu de crypter ces identifiants par application d'un chiffrement tel qu'il ne soit pas possible de déterminer si deux résultats issus de ce chiffrement $c_1$ et $c_2$ correspondent au même identifiant Id ou non.

A cet effet, on met en oeuvre une fonction de chiffrement probabiliste basée à la fois sur une clé de chiffrement et sur une valeur aléatoire. Ainsi, en générant une valeur aléatoire pour chaque nouvelle adresse de stockage de l'identifiant, on est en mesure de stocker plusieurs fois un même identifiant sous des valeurs chiffrées différentes.

Une telle fonction de chiffrement a une propriété dite 'd'indistingabilité' ('indistinguishable' en anglais). On peut notamment utiliser ici à cet effet une fonction de chiffrement d'El Gamal par exemple, Taher El Gamal: A Public Key Cryptosystem and a Signature Scheme Based on Discrete Logarithms. CRYPTO 1984 (10-18). On peut encore prévoir aussi d'utiliser des fonctions de chiffrement symétrique comme des fonctions AES (pour 'Advanced Encryption Standard') en mode CBC (pour 'Cipher Block Chaining') ou encore AES en mode CTR (pour 'Counter').

Ainsi, dans ce exemple, l'identifiant est stocké sous forme chiffrée par application d'une fonction de chiffrement sur la base d'une clé de chiffrement et d'une valeur aléatoire. Dans ce cas, à l'étape /5/, on reçoit une liste d'identifiants chiffrés. Puis, le procédé comprend en outre les étapes suivantes après l'étape /5/ :

/i/ déchiffrer les identifiants reçus ;
/ii/ sélectionner un identifiant qui apparait un nombre de fois supérieur à une valeur seuil parmi les identifiants reçus.

La valeur seuil peut avantageusement être définie en fonction de la fonction de chiffrement probabiliste.

Grâce à ces dispositions, il est possible de protéger en outre les échanges d'informations transitant entre l'entité d'identification et la base de données. De plus, même au sein de la base de données il n'est pas possible de déterminer les identifiants qui y sont stockés.

Ainsi, on dispose d'un système d'identification qui présente de faibles coûts calculatoires tout en garantissant un niveau élevé de protection de la confidentialité des informations qui y sont gérées.

En outre, dans un exemple, on peut prévoir d'obtenir un mot clé par concaténation, d'une part, du résultat de l'application d'une fonction de hachage sur la donnée biométrique de référence ou à identifier et, d'autre part, d'un indice associé à la fonction de hachage appliquée, des indices différents les une des autres étant respectivement associés aux fonctions de hachage de la famille de hachage.

En procédant ainsi, il est avantageusement possible de garantir qu'un même identifiant ne soit pas stocké plusieurs fois à une même adresse dans la base de données.

Un troisième aspect de la présente invention propose une entité de gestion de base de données adaptée pour la mise en oeuvre d'un procédé de gestion selon le premier aspect de la présente invention.

Un quatrième aspect de la présente invention propose une entité d'identification adaptée pour la mise en oeuvre d'un procédé d'identification selon le deuxième aspect de la présente invention.

Un cinquième aspect de la présente invention propose un système d'identification comprenant une entité de gestion de base de données selon le troisième aspect de la présente invention; une base de données et une entité d'identification selon le quatrième aspect de la présente invention.

D'autres aspects, buts et avantages de l'invention apparaîtront à la lecture de la description.

L'invention sera également mieux comprise à l'aide des dessins, sur lesquels :

- la figure 1 illustre un système d'identification selon la présente invention ;
- la figure 2 illustre les principales étapes d'une gestion de base de données selon la présente invention ; et
- la figure 3 illustre les principes étapes d'une identification selon la présente invention.

Dans le contexte de la présente invention, on entend par les termes 'données biométriques' des données de l'être humain qui permettent de l'identifier. Ces données biométriques sont en général obtenues par un capteur. Un tel capteur peut donc être adapté pour capter des données biométriques d'empreinte, d'iris, de visage, de graphologie ou encore de signature vocale par exemple.

Par la suite, un système d'identification comprend une base de données, une entité de gestion de base de données et une entité d'identification. Il convient de noter qu'aucune limitation n'est attachée à cette architecture. Notamment, l'entité de gestion et l'entité d'identification peuvent bien sûr correspondre à une seule et même entité.

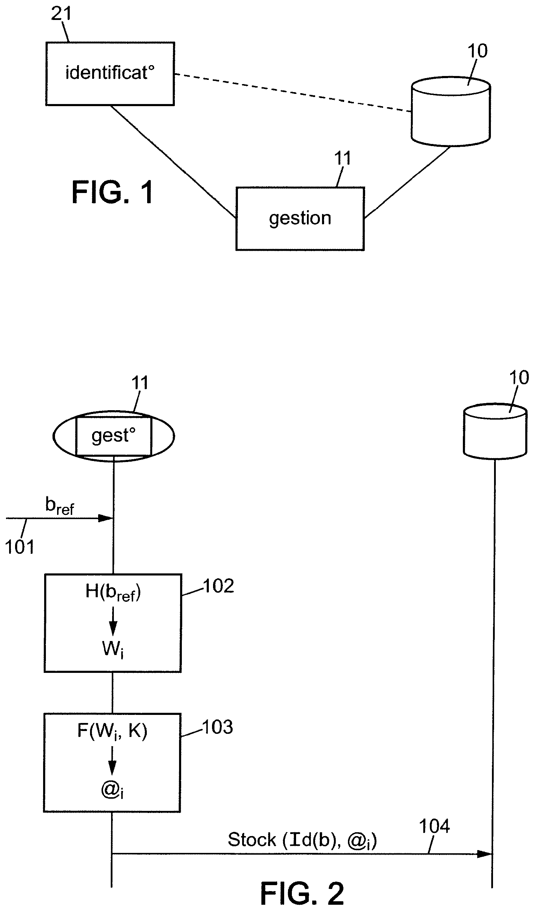

La figure 1 illustre un système d'identification selon la présente invention. Un tel système d'identification comprend donc une base de données 10, une entité de gestion 11, et une entité d'identification 21. On peut prévoir que l'entité d'identification 21 comprenne un capteur de données biométriques et soit en mesure de mettre en oeuvre les étapes qui permettent d'obtenir une liste d'adresses de la base de données. Dans ce cas, on peut aisément envisager la mise en place d'une interface directe entre la base de données 10 et l'entité d'identification. On peut également envisager que l'entité d'identification 21 soit en charge simplement de capter la donnée biométrique $b_{search}$ à identifier. Dans ce cas, cette donnée biométrique est transmise à l'entité de gestion 11 qui est en charge de déterminer les adresses $@_i$ de la base de données pour une phase d'identification. Il est aisé de définir différentes architectures mettant en oeuvre les principes de la présente invention. Aucune limitation n'est attachée à l'architecture d'un tel système d'identification.

Toutefois, dans les sections suivantes, à titre d'exemple, l'entité de gestion est en charge de déterminer les adresses $@i$ sur la base d'une donnée biométrique de référence $b_{ref}$ lors d'une phase de remplissage de la base de données (dite encore phase d'enrôlement) et l'entité d'identification 21 est en charge de déterminer les adresses $@_i$ sur la base d'une donnée biométrique à identifier $b_{search}$ et de récupérer les identifiants correspondants directement auprès de la base de données 10.

Afin d'accroitre le niveau de protection de la confidentialité des échanges au sein de ce système d'identification, on peut avantageusement prévoir d'utiliser des liens de communication sécurisés.

La figure 2 illustre les principales étapes d'un procédé de gestion de base de données selon la présente invention.

Une entité de gestion 11 est en charge de gérer une base de données 10 adaptée pour associer à des données biométriques des identifiants respectifs selon la présente invention. L'entité de gestion 11 reçoit un message 101 comprenant une donnée biométrique b à associer avec un identifiant Id pour un utilisateur U dans la base de données 10 pour des recherches ultérieures d'identification.

Cette donnée biométrique b est par la suite référencée sous les termes 'donnée biométrique de référence' $b_{ref}$.

A une étape 102, il est prévu de générer une pluralité de mots clé par application d'une famille H de fonctions de hachage à la donnée biométrique. La famille de fonctions H comprend les fonctions de hachage $h_i$ pour i compris entre 1 et $\mu$.

On peut prévoir à cet effet d'utiliser des fonctions de hachage de type LSH.

Une fonction LSH est une fonction de hachage qui a pour caractéristique de fournir un résultat similaire quand elle est appliquée à des points qui sont voisins dans un espace métrique. Une telle fonction est notamment définie dans le document 'Approximate nearest neighbors :Towards removing the cruse of dimensionality' de P. Indyk et R. Motwani, STOC 1998.

Soit B un espace métrique, U un ensemble de valeurs d'arrivée des fonctions de hachage de la famille considérée, r1 et r2 deux nombres réels vérifiant :

$$r1 < r2$$

soit p1 et p2 appartenant à l'ensemble [0, 1] et vérifiant :

$$p1 > p2$$

Soit une famille H de fonctions de hachage $h_1, ..., h_\mu$.

Toute fonction $h_i$, pour i compris entre 1 et $\mu$, allant de B vers U, est une fonction (r1, r2, p1, p2)-LSH, si pour toute fonction $h_i$ dans la famille H, et pour tout élément a et b de l'ensemble B, on a :

si $d_B(a,b) < r1$, alors $Pr[h_i(a) = h_i(b)] > p1$

et

si $d_B(a,b) > r2$, alors $Pr[h_i(a) = h_i(b)] < p2$
où $d_B(a,b)$ est la distance entre a et b éléments de B dans l'espace métrique B.

On peut par exemple prendre une famille H de fonctions LSH correspondant à l'ensemble de toutes les projections canoniques dans l'espace de Hamming $\{0, 1\}^n$.

Dans ce cas, chaque fonction $h_i$ fait correspondre une valeur $x_i$ à un ensemble de valeurs $(x_1, ..., x_n)$.

Puis pour tous r1 et r2 appartenant à l'ensemble des entiers compris entre 1 et n, et vérifiant :

$$r1 < r2,$$

les fonctions $h_i$ sont dites des fonctions $(r_1, r_2, 1-r_1/n, 1-r_2/n)$-LSH.

On peut également avantageusement prévoir , par exemple, de mettre en oeuvre une famille de fonctions LSH telle que celle qui a été proposée dans le document "Efficient search for approximate nearest neighbor in high dimensional spaces'.

A l'issue de cette étape 102, on dispose donc d'un ensemble de valeurs de mots clé $w_i$ respectivement obtenues par application des fonctions $h_i$ sur la donnée biométrique $b_{ref}$. Ces valeurs $w_i$ sont référencées en tant que mots clé car elles sont utilisées pour effectuer des recherches dans la base de données 10.

Ensuite, à une étape 103, on obtient une pluralité d'adresses $@_i$ dans la base de données par application d'une fonction d'adressage F à la pluralité de mots clé et à une clé secrète K.

Cette fonction d'adressage F est adaptée pour faire correspondre une clé secrète K et un mot clé $w_i$ à une adresse dans la base de données. Aucune limitation n'est attachée à cette fonction F.

On obtient donc $\mu$ adresses $@_i$, pour i compris entre 1 et $\mu$, dans la base de données, une adresse pour chaque mot clé :

$$@_i = F(K, h_i(b))$$

Puis l'entité de gestion de la base de données émet un message 104 vers la base de données pour y stocker $\mu$ fois l'identifiant Id associé à la donnée biométrique $b_{ref}$, aux $\mu$ adresses ainsi obtenues $@_i$.

Dans ce contexte, il est possible d'obtenir une même adresse $@_i$ pour deux données biométriques différentes b et b". En effet, il suffit que la donnée biométrique b" soit telle que :

$$h_i(b'') = h_i(b)$$

Autrement dit, il s'agit du cas où les données biométriques b et b" sont proches au sens de LSH.

Par conséquent, il est possible qu'à une même adresse soit stockés des identifiants de deux données biométriques différentes issues de deux utilisateurs différents mais qui sont proches au sens de LSH.

Par conséquent, à une même adresse $@_i$, une liste d'identifiants peut être stockée. Dans un exemple, on prévoit de stocker un nombre constant d'identifiants par adresse $@_i$, afin de ne pas fournir d'informations qui pourraient faciliter une attaque statistique des informations confidentielles.

Ainsi, on stocke un nombre $N_{max}$ d'identifiants par adresse $@_i$, certains de ces identifiants étant virtuels et ne correspondant à aucune données biométriques d'un utilisateur réel.

En outre, afin de garantir qu'un même identifiant Id ne soit pas stocké deux fois à la même adresse $@_i$, il est avantageusement prévu dans un exemple de concaténer le résultat en sortie d'une fonction de hachage $h_i$ avec une valeur, ou encore indice, qui lui est dédiée au sein de la famille de fonction de hachage. On peut par exemple considérer que cette valeur correspond à son rang i dans la famille de fonctions de hachage pour obtenir un mot clé différent relativement à chaque fonction de hachage $h_i$.

Ainsi, on peut prévoir que les mots clé $w_i$ vérifient l'équation suivante :

$$w_i = h_i(b_{ref})|i$$

Les sections suivantes décrivent une étape d'initialisation, une étape d'enrôlement, c'est-à-dire de stockage d'une association entre des données biométriques $b_i$ et des identifiants $Id_i$, pour i compris entre 1 et N, et une étape d'identification selon un exemple. Dans une étape d'initialisation, on définit une famille de fonctions de hachage de type LSH, une clé secrète K.

Dans une étape d'enrôlement, on détermine un ensemble $\Delta$ de mots clé tel que :

$$\Delta = \left\{ h_i(b_k) \middle\| i ; i \in \left[1, \mu\right], k \in \left[1, N\right] \right\}$$

Puis, pour chaque mot clé $w_{i,k}$ de l'ensemble $\Delta$, on construit un ensemble des identifiants des utilisateurs de 1 à N tels que :

$$h_i(b_{k'}) \middle\| i = w_{i,k}$$

Puis, pour chaque $w_i$ de $\Delta$,

pour j compris entre 1 et $|D(w_i)|$ :

$$@_{i,j} = F(w_i \middle\| j)$$

Il convient de noter ici que le mot clé $w_i$ est concaténé avec le rang j de l'identifiant dans la liste des identifiants. Dans ce contexte de phase d'enrôlement groupé pour plusieurs utilisateurs, selon l'équation ci-dessus, il est garanti de ne pas stocker les identifiants selon un ordre séquentiel.

Il convient de rappeler que, de préférence, le même nombre d'identifiants est stocké à chacune des adresses $@_{i,j}$.

Dans une variante, les identifiants $Id_i$ sont chiffrés avec une fonction de chiffrement probabiliste $\varepsilon$ sur la base d'une valeur aléatoire $r_i$ et d'une clé de chiffrement s. Dans ce cas, les identifiants sont stockés sous la forme :

$$\varepsilon(Id_i, r_i, s), \text{ noté } \varepsilon(Id_i) \text{ par la suite.}$$

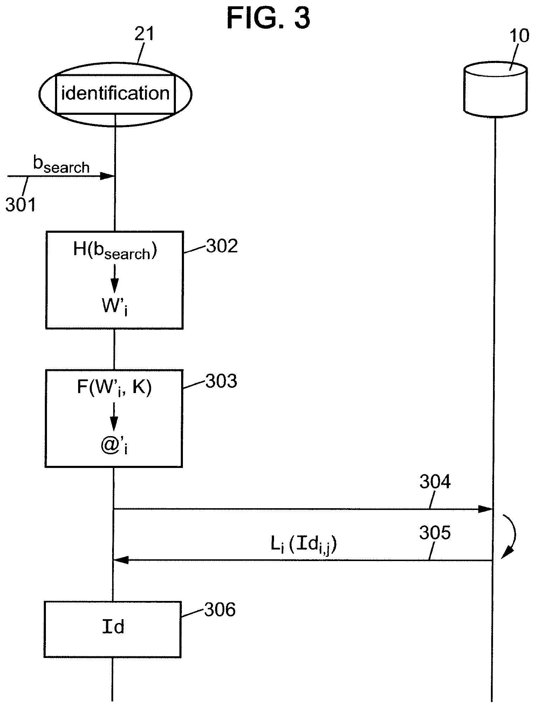

La figure 3 illustre une identification selon la présente invention.

Dans ce contexte, pour identifier un utilisateur sur la base de données biométriques, on reçoit 301 une donnée biométrique à identifier $b_{search}$ sur cet utilisateur. A une étape 302, on détermine des mots clé $w'_i$ par application respectives des fonctions de hachage à la donnée biométrique à identifier.

$$w'_i = h_i(b_{search})$$

Dans une variante, afin d'éviter de stocker plusieurs fois un même identifiant à la même adresse, les mots clé vérifient :

$$w'_i = h_i(b_{search})|i$$

Puis, à une étape 303, on obtient des adresses dans la base de données associées à cette donnée biométrique :

$$@'_i = F(K, w'_i)$$

Cette liste d'adresse est envoyée à la base de données 10 via un message 304.

Pour chacune de ces adresses, on récupère une liste d'identifiants comme suit, via un message 305. Pour l'adresse $@'_1$, on récupère la liste :

$$L_1 = \{id_{1,1} ; \dots ; id_{1,Nmax}\}$$

Pour l'adresse $@'_2$, on récupère la liste :

$$L_2 = \{id_{2,1} ; \dots ; id_{2,Nmax}\}$$

Ainsi de suite jusqu'à l'adresse $@'_\mu$, on récupère la liste :

$$L_\mu = \{id_{\mu,1} ; \dots ; id_{\mu,Nmax}\}$$

où $id_{j,k}$ représente l'identifiant stocké à l'adresse $@'_j$ au rang k.

Ensuite, on est en mesure d'identifier ou non l'utilisateur concerné sur la base d'une analyse statistique, à une étape 306.

Dans le cas où les identifiants sont chiffrés, les listes récupérées sont les suivantes. Pour l'adresse @'$_1$, on récupère la liste :

$$L_1 = \{\varepsilon(id_{1,1}) \; ; \; \ldots \; ; \; \varepsilon(id_{1,Nmax})\}$$

Pour l'adresse @'$_2$, on récupère la liste :

$$L_2 = \{\varepsilon(id_{2,1}); \; \ldots \; ; \; \varepsilon(id_{2,Nmax})\}$$

Ainsi de suite jusqu'à l'adresse @'$_\mu$, on récupère la liste :

$$L_\mu = \{\varepsilon(id_{\mu,1}); \; \ldots \; ; \; \varepsilon(id_{\mu,Nmax})\}$$

Dans ce cas, tous les identifiants reçus sont décryptés. On détermine le nombre d'occurrences de chacun des identifiants pour déterminer la liste de celui qui apparait un nombre de fois supérieur à une valeur seuil $\lambda_\mu$.

Dans les conditions énoncées ci-avant, le système d'identification d'un exemple présente non seulement l'avantage d'être aisé à mettre en oeuvre mais en outre de garantir un niveau élevé de protection de la confidentialité des informations.

## Revendications

1. Procédé de gestion d'une base de données (10) adaptée pour associer une donnée biométrique (b) et un identifiant (Id(b)) ;
   ledit procédé comprenant les étapes suivantes pour chaque identifiant à associer à une donnée biométrique :

   i) recevoir (101) une donnée biométrique (b$_{ref}$) ;
   ii) générer (102) une pluralité de mots clé par application d'une famille (H) de fonctions de hachage à la donnée biométrique ;
   iii) obtenir (103) une pluralité d'adresses (@$_i$) par application d'une fonction d'adressage (F) à la pluralité de mots clé et à une clé secrète ;
   iv) stocker (104) ledit identifiant à ladite pluralité d'adresses.

2. Procédé de gestion d'une base de données (10) selon la revendication 1, dans lequel l'identifiant est stocké sous forme chiffrée par application d'une fonction de chiffrement probabiliste sur la base d'une clé de chiffrement (s) et d'une valeur aléatoire (r).

3. Procédé de gestion d'une base de données (10) selon la revendication 1 ou 2, dans lequel, à l'étape ii), un mot clé est obtenu par concaténation d'une part du résultat de l'application d'une fonction de hachage sur la donnée biométrique et d'autre part d'un indice associé à la fonction de hachage appliquée, des indices différents les uns des autres étant respectivement associés aux fonctions de hachage de la famille de hachage.

4. Procédé d'identification biométrique à partir d'une base de données gérée selon un procédé de gestion selon l'une quelconque des revendications précédentes basé sur une famille de fonctions de hachage, une clé secrète, une fonction d'adressage ;
   ledit procédé comprenant les étapes suivantes :

   i) recevoir une donnée biométrique à identifier (b$_{search}$);
   ii) générer une pluralité de mots clé par application de ladite famille de fonctions de hachage à la donnée biométrique à identifier ;
   iii) générer une pluralité d'adresses (@$_i$) par application de la fonction d'adressage (F) à la pluralité de mots clé (h$_i$(b$_{search}$)) et à ladite clé secrète ;
   iv) émettre une requête d'identification indiquant ladite liste d'adresses ;
   v) recevoir une liste d'identifiants ({id$_{1,1}$, .. id$_{1,N1}$}) pour chacune desdites adresses ; et
   vi) décider si un identifiant de la liste d'identifiants est associé à la donnée biométrique à identifier sur la base d'une analyse statistique des identifiants reçus.

5. Procédé d'identification biométrique selon la revendication 4, dans lequel ledit identifiant est stocké sous forme chiffrée par application d'une fonction de chiffrement probabiliste sur la base d'une clé de chiffrement (s) et d'une valeur aléatoire (r), et dans lequel à l'étape v), on reçoit une liste d'identifiants chiffrés ; ledit procédé comprenant en outre les étapes suivantes après l'étape v):

   a) déchiffrer les identifiants reçus ;
   b) sélectionner un identifiant s'il apparait un nombre de fois supérieur à une valeur seuil parmi les identifiants reçus.

6. Procédé d'identification biométrique selon la revendication 4 ou 5, dans lequel un mot clé est obtenu par concaténation d'une part du résultat de l'application d'une fonction de hachage sur la donnée biométrique et d'autre part d'une valeur associée à la fonction de hachage appliquée, des valeurs différentes les unes des autres étant respectivement associées aux fonctions de hachage de la famille de hachage.

**7.** Entité de gestion de base de données comprenant des moyens adaptés pour la mise en oeuvre d'un procédé de gestion de base de données selon l'une quelconque des revendications 1 à 3.

**8.** Entité d'identification comprenant des moyens adaptés pour la mise en oeuvre d'un procédé de gestion de base de données selon l'une quelconque des revendications 4 à 6.

**9.** Système d'identification comprenant une entité de gestion de base de données selon la revendication 7, une base de données (10) et une entité d'identification selon la revendication 8.

**Patentansprüche**

**1.** Verfahren zur Verwaltung einer Datenbank (10), das dazu ausgelegt ist, ein biometrisches Muster (b) und eine Kennung (Id(b)) zuzuordnen; wobei das Verfahren für jede einem biometrischen Muster zuzuordnende Kennung die folgenden Schritte umfasst:

i) Empfangen (101) eines biometrischen Musters ($b_{ref}$) ;
ii) Erzeugen (102) mehrerer Schlüsselwörter durch Anwendung einer Familie (H) von Hash-Funktionen auf das biometrische Muster;
iii)Erhalten (103) einer Vielzahl von Adressen ($@_i$) durch Anwendung einer Adressierungsfunktion (F) auf die mehreren Schlüsselwörter und auf einen Geheimschlüssel;
iv) Speichern (104) der Kennung in der Vielzahl von Adressen.

**2.** Verfahren zur Verwaltung einer Datenbank (10) nach Anspruch 1, bei dem die Kennung durch Anwendung einer Funktion zur probabilistischen Verschlüsselung auf der Grundlage eines Chiffrierungsschlüssels (s) und eines Zufallswerts (r) in verschlüsselter Form gespeichert wird.

**3.** Verfahren zur Verwaltung einer Datenbank (10) nach Anspruch 1 oder 2, bei dem im Schritt ii) durch Verkettung einerseits von Ergebnisse der Anwendung einer Hash-Funktion auf das biometrische Muster und andererseits von einer angewandten Hash-Funktion zugeordneten Index ein Schlüsselwort erhalten wird, wobei voneinander verschiedenen Indices jeweils den Hash-Funktionen der Hash-Familie zugeordnet werden.

**4.** Biometrisches Identifikationsverfahren auf der Grundlage einer Datenbank, die gemäß einem Verwaltungsverfahren nach einem der vorangehenden Ansprüche verwaltet wird, basierend auf einer Familie von Hash-Funktionen, einem Geheimschlüssel, einer Adressierungsfunktion; wobei das Verfahren die folgenden Schritte umfasst:

i) Empfangen eines zu identifizierenden biometrischen Musters ($b_{search}$);
ii) Erzeugen einer Vielzahl von Schlüsselwörter durch Anwendung der Familie von Hash-Funktionen auf das zu identifizierende biometrische Muster;
iii)Erzeugen einer Vielzahl von Adressen ($@_i$) durch Anwendung der Adressierungsfunktion (F) auf die Vielzahl von Schlüsselwörter ($h_i$ ($b_{search}$) ) und auf den Geheimschlüssel;
iv) Ausgeben einer Identifikationsanforderung, die die Adressenliste anzeigt;
v) Empfangen einer Kennungsliste ($\{id_{1,1}, .. id_{1,N1}\}$ ) für jede der Adressen; und
vi) Entscheiden, ob eine Kennung der Kennungsliste dem zu identifizierenden biometrischen Muster zugeordnet ist, auf der Grundlage einer statistischen Analyse der empfangenen Kennungen.

**5.** Biometrisches Identifikationsverfahren nach Anspruch 4, bei dem die Kennung durch Anwendung einer Funktion zur probabilistischen Verschlüsselung auf der Grundlage eines Chiffrierungsschlüssels (s) und eines Zufallswerts (r) in verschlüsselter Form gespeichert wird und bei dem im Schritt v) eine Liste verschlüsselter Kennungen empfangen wird; wobei das Verfahren ferner nach Schritt v) die folgenden Schritte umfasst:

a) Entschlüsseln der empfangenen Kennungen;
b) Auswählen einer Kennung aus den empfangenen Kennungen, wenn sie mit einer einen Schwellwert überschreitenden Häufigkeit auftritt.

**6.** Biometrisches Identifikationsverfahren nach Anspruch 4 oder 5, bei dem durch Verkettung einerseits der Ergebnisse der Anwendung einer Hash-Funktion auf das biometrische Muster und andererseits angewandten Hash-Funktion zugeordneten Werts ein Schlüsselwort erhalten wird, wobei voneinander verschiedenen Werte jeweils den Hash-Funktionen der Hash-Familie zugeordnet werden.

**7.** Datenbankverwaltungseinheit, umfassend Mittel, die zur Ausführung eines Verfahrens zur Verwaltung einer Datenbank nach einem der Ansprüche 1 bis 3 geeignet sind.

**8.** Identifikationseinheit, umfassend Mittel, die zur Ausführung eines Verfahrens zur Verwaltung einer Datenbank nach einem der Ansprüche 4 bis 6 geeignet sind.

9. Identifikationssystem, umfassend eine Datenbankverwaltungseinheit nach Anspruch 7, eine Datenbank (10) und eine Identifikationseinheit nach Anspruch 8.

**Claims**

1. Method for managing a database (10) associating a piece of biometric data (b) and an identifier (Id(b)); said method comprising the following steps for each identifier to be associated with a piece of biometric data:

   i) receiving (101) a piece of biometric data ($b_{ref}$);
   ii) generating (102) a plurality of keywords by applying a family (H) of hash functions to the piece of biometric data;
   iii) obtaining (103) a plurality of addresses ($@_i$) by applying an addressing function (F) to the plurality of keywords and to a secret key;
   iv) storing (104) said identifier at said plurality of addresses.

2. Method for managing a database (10) according to claim 1, wherein the identifier is stored in encrypted form by applying a probabilistic encryption function on the basis of an encryption key (s) and a random value (r).

3. Method for managing a database (10) according to claim 1 or 2, wherein, in step ii), a keyword is obtained by concatenating the result of applying a hash function to the piece of biometric data with an index associated with the applied hash function, indexes which differ from one another being respectively associated with the hash functions of the hash family.

4. Method of biometric identification using a database managed according to a method according to any one of the above claims, based on a family of hash functions, a secret key, and an addressing function; said method comprising the following steps:

   i) receiving a piece of biometric data to be identified ($b_{search}$);
   ii) generating a plurality of keywords by applying said family of hash functions to the piece of biometric data to be identified;
   iii) generating a plurality of addresses ($@_i$) by applying the addressing function (F) to the plurality of keywords ($h_i(b_{search})$) and to said secret key;
   iv) issuing a request for identification indicating said list of addresses;
   v) receiving a list of identifiers ($\{id_{1,1}, .. \, id_{1,N1}\}$) for each of said addresses; and
   vi) deciding whether an identifier in the list of identifiers is associated with the piece of biometric data to be identified, on the basis of a statistical analysis of the identifiers received.

5. Method of biometric identification according to claim 4, wherein said identifier is stored in encrypted form by applying a probabilistic encryption function on the basis of an encryption key (s) and a random value (r), and wherein in step v), a list of encrypted identifiers is received; said method additionally comprising the following steps after step v):

   a) decrypting the identifiers received;
   b) selecting an identifier if it appears among the received identifiers a number of times greater than a threshold value.

6. Method of biometric identification according to claim 4 or 5, wherein a keyword is obtained by concatenating the result of applying a hash function to the piece of biometric data with a value associated with the applied hash function, values which differ from one another being respectively associated with the hash functions of the hash family.

7. Database management unit comprising means for implementing a method of database management according to any one of claims 1 to 3.

8. Identification unit comprising means for implementing a method of database management according to any one of claims 4 to 6.

9. Identification system comprising a database management unit according to claim 7, a database (10), and an identification unit according to claim 8.

FIG. 1

FIG. 2

# FIG. 3

21

10

identification

$b_{search}$

301

$H(b_{search})$

$W'_i$

302

$F(W'_i, K)$

$@'_i$

303

304

$L_i(Id_{i,j})$

305

Id

306

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008097983 A1, Monro Donald Martin

- WO 2007008789 A2

**Littérature non-brevet citée dans la description**

- **REZA CURTMOLA ; JUAN A. GARAY ; SENY KAMARA ; RAFAIL OSTROVSKY.** Searchable symmetric encryption: improved definitions and efficient constructions. *ACM Conference on Computer and Communications Security,* 2006
- **P. INDYK ; R. MOTWANI.** Approximate Nearest Neighbors: Towards Removing the Curse of Dimensionality. *STOC,* 1998

- **TAHER EL GAMAL.** A Public Key Cryptosystem and a Signature Scheme Based on Discrete Logarithms. *CRYPTO 1984,* 10-18
- **P. INDYK ; R. MOTWANI.** Approximate nearest neighbors :Towards removing the cruse of dimensionality. *STOC,* 1998